# EUROPEAN PATENT SPECIFICATION

(11) **EP 1 979 722 B1**
(45) Date of publication and mention of the grant of the patent: **16.06.2010**
(21) Application number: 06719883.8
(22) Date of filing: 30.01.2006
(51) Int. Cl.: G01F 23/76, G01F 23/296, G01F 23/38

(54) **LIQUID LEVEL AND DENSITY MEASUREMENT DEVICE**
FLÜSSIGKEITSSTAND- UND DICHTEMESSEINRICHTUNG
DISPOSITIF DE MESURE DU NIVEAU ET DE LA DENSITE D UN LIQUIDE

(43) Date of publication of application: 15.10.2008
(73) Proprietor: Franklin Fueling Systems, Inc., Madison WI 53718 (US)
(72) Inventor: DEMIN, Vitaliy, Saco, Maine 04072 (US)
(74) Representative: Newstead, Michael John
(86) International application number: PCT/US2006/003236
(87) International publication number: WO 2007/086873

(56) References cited:
- RU-C1- 2 138 028
- US-A- 4 155 254
- US-A- 4 581 931

## Description

### THE FIELD OF THE INVENTION

This invention relates to a device for measuring the level and density of a liquid in a tank, such as an underground petroleum storage tank.

### BACKGROUND OF THE INVENTION

Magnetostrictive transducers are widely used for the liquid level measurement. See, for example, Koski et al., U.S. Patent 4,839,590. Koski et al., discloses a measurement device for precision measurement of a liquid level in an underground storage tank that, in combination with a temperature measurement, allows detecting very small leaks from the tank. There is also a need for an accurate product density measurement in the same containers where the level is being measured.

A widely known method of density measurement is based on the hydrostatic principle that the weight loss of an object in a liquid equals the weight of the liquid displaced. The method is used in hydrometers where a relatively large weighted lower portion of a body is completely immersed into a liquid and a tall narrow upper section with a scale sticks out above the surface. The immersion depth of the hydrometer is in an inverse proportion to the liquid density. The hydrometer will float higher in a heavy liquid and lower in a light liquid. The sensitivity of the hydrometer is in an inverse proportion with a cross section of the upper section. The narrower this part is, the more sensitive the hydrometer is. The measurement range of the hydrometer is in direct proportion with the height of upper part. The taller that part is, the larger measurement range is.

There are also devices that combine level and density measurement in one magnetostrictive transducer. See, for example, Nyce et al., U.S. Patent 5,253,522, and Russian patent RU 2138028.

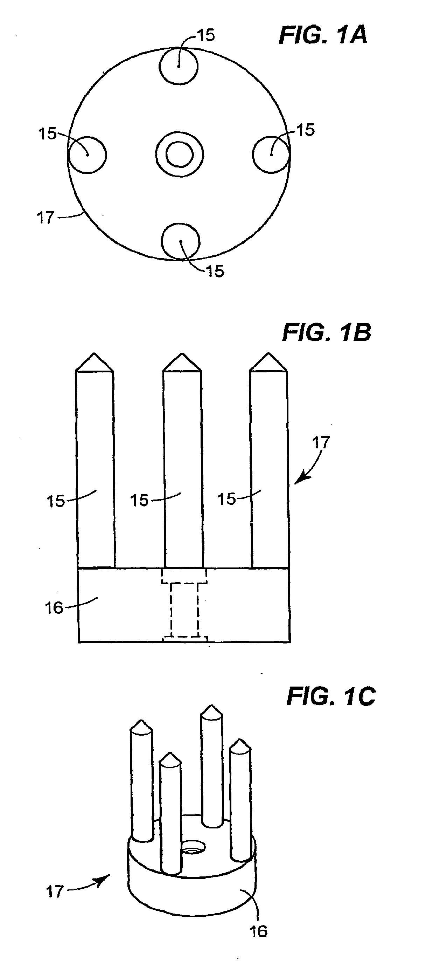

The device disclosed in the Russian patent, and as generally illustrated in Figures 1a, 1b and 1c, includes a liquid density float 17, and a liquid level measurement float (not shown). The level measurement float is relatively less sensitive to liquid density variation and the liquid density float 17 is relatively more sensitive to liquid density variation. The liquid density float 17 is made in the form of an immersed cylinder 16 and four narrow vertical rods 15 that are located on top of the cylinder around its perimeter and extend above the surface. In essence, it is a group of four hydrometers connected together. The diameter of the density float 17 should be large enough to allow the liquid level float to freely move between the rods 15.

Size is one drawback of such a device. As discussed above, magnetostrictive transducers are widely used for leak detection in underground tanks. Such leak detection requires reliable measurement or very small changes of the liquid level, in the range of 0.001 inches (0.025 mm) or less. To achieve this type of resolution, the float for the level measurement should be heavy enough and therefor large enough to overcome the friction between the float and the body of the transducer, otherwise an effect known as "stiction" can mask a leak. At the same time, standard openings in the tanks for the transducer installation are typically four inches (100 mm) in diameter or less, which limits the permitted diameter of the float. To increase the tank opening size would be expensive.

To be able to combine level and density measurement into one transducer installed into a standard tank opening, without compromising leak detection capabilities, requires a density float to take as small a portion of the opening diameter as possible and leave sufficient room for the level float

### SUMMARY OF THE INVENTION

The present invention is defined by the accompanying claims.

### BRIEF DESCRIPTION OF THE DRAWINGS

Figures 1a, 1b and 1c are respective top, side and perspective views of a prior art liquid density measurement device.

Figures 2a, 2b and 2c are respective top, side and perspective views of a density float of the liquid level and density measurement device according to the invention.

Figures 3a and 3b are side sectional views of the liquid level and density measurement device of Figures 2a and 2b, illustrating the float positions in liquids of different densities.

### DESCRIPTION OF THE PREFERRED EMBODIMENT

While this invention is susceptible of embodiment in many different forms, there will be described herein in detail, a specific embodiment thereof with the understanding that the present disclosure is to be considered as an exemplification of the principles of the invention and is not intended to limit the invention to the specific embodiment illustrated.

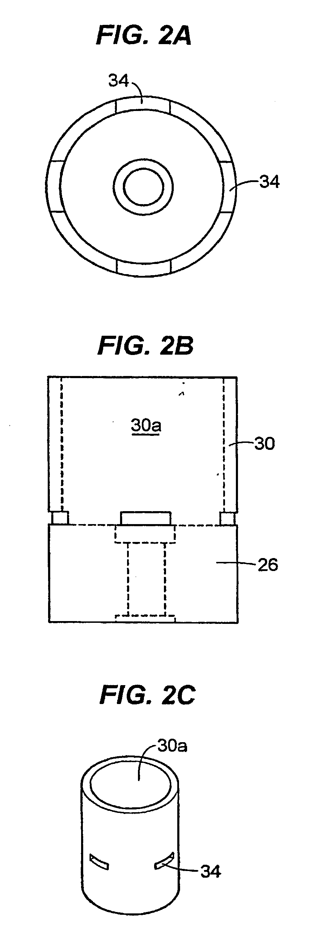

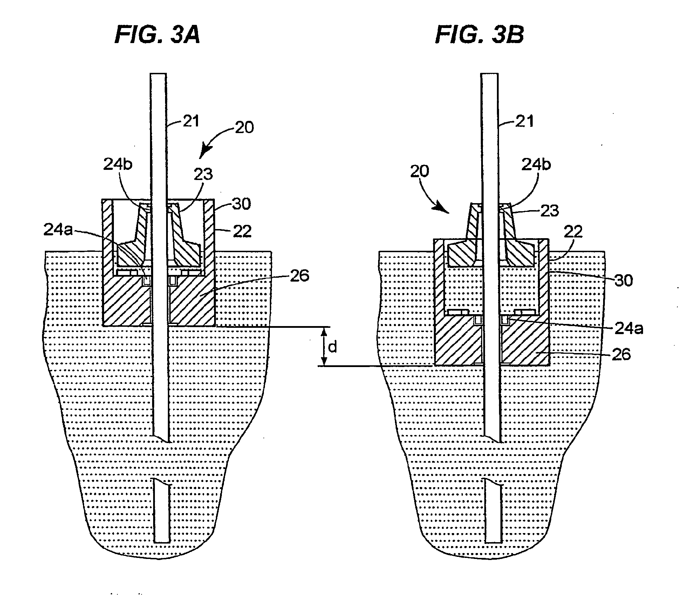

A liquid level and density measurement device, generally designated 20, is illustrated in Figures 2a, 2b, 2c, 3a and 3b. The liquid level and density measurement device 20 comprises a conventional, elongated magnetostrictive transducer 21 and first and second transducer magnets 24a and 24b. The first transducer magnet 24a is embedded into a liquid density float 22, which is relatively more sensitive to liquid density variations. The second transducer magnet 24b is embedded in a liquid level float 23, which is relatively less sensitive to liquid density variations. The floats 22, 23 can freely move along the transducer 21. The liquid level float 23 is used for liquid level measurement, and the liquid density 22 is used for liquid density measurement.

The liquid density float 22 has a lower part 26 completely immersed into a liquid 28 and an upper part 30 partially immersed into the liquid 28. The upper part 30 is made substantially in the form of a hollow cylinder, with an internal diameter defining a cavity 30a. The internal diameter of the cavity 30a is dimensioned larger than the external diameter of the liquid level float 23. Therefore the liquid density float 22 can move up and down without touching the liquid level float 23.

The liquid density float 22 is shown in a relatively more dense liquid in Figure 3a and in a relatively less dense liquid in Figure 3b. The difference in height "d" is indicative of the relative difference of the densities of the two liquids.

The liquid density float 22 preferably is made of a low density material with a ballast at the bottom. The lower part 26 preferably has a diameter of approximately 95 mm. The upper part preferably has an outer diameter of 95 mm and an inner diameter of approximately 72 mm.

The liquid level float is preferably made of a low density material. It has a diameter preferably of approximately 72mm.

Openings 34 are provided through the upper part 30 to permit fluid to flow into the cavity 30a.

Because the generally cylindrical upper part 30 of the liquid density float 22 has circumferentially more mass than does the prior art liquid density float, its diameter can be reduced to permit insertion through a typical four inch (100 mm) tank opening.

The upper part 30 of the liquid density float 22 may be other than cylindrical. For example it may have a taper due to its formation during a molding process.

From the foregoing, it will be observed that numerous variations and modifications may be effected and it is to be understood that no limitation with respect to the specific apparatus illustrated herein is intended or should be inferred. It is, of course, intended to cover by the appended claims all such modifications as fall within the scope of the Claims.

## Claims

1. A device (20) for placement in a tank of liquid for determining the level and density of the liquid in the tank, the device comprising:
a liquid density sensing float (22) having a lower base portion (26) and an upper portion (30) defining a cavity (30a);
a liquid level sensing float (23) disposed in the cavity;
circuitry for determining the height of the density sensing float and the level sensing float;
**characterised in that** the upper portion (30) extends substantially continuously about a periphery of the base portion.

2. A device (20) according to claim 1, wherein the density sensing float (22) and the level sending float (23) each include a magnet (24a or 24b) and the circuitry includes a magnetostrictive transducer (21).

3. A device (20) according to claim 2, wherein the density sensing float (22) and the level sensing float (23) each include an aperture to slidably receive the magnetostrictive transducer (21).

4. A device (20) according to claim 1, wherein the density sensing float (22) is dimensioned to fit through a 100 mm (four inch) opening into the tank.

5. A device (20) according to claim 1, wherein the upper portion (30) is substantially cylindrical.

6. A device (20) according to claim 1 for placement in an underground liquid storage tank for determining the level and density of liquid in the tank, wherein:
the device comprises a magnetostrictive transducer (21) to be generally vertically disposed in the tank;
the upper portion (30) is generally cylindrical, the density sensing float (22) includes a magnet (24a) and the base portion (26) has a bore to slidably receive the transducer;
the liquid level sensing float (23) is slidably disposed in the cavity (30a) and has a bore to slidably receive the transducer and the level sensing float includes a magnet (24b); and
said circuitry is coupled to the transducer for determining the position of the magnets relative to the transducer.

7. A system for measuring the height and density of a liquid comprising:
an underground storage tank containing the liquid and having a nominal 100 mm (four inch) opening;
a magnetostrictive transducer (21) generally vertically disposed in the tank; and
a device (20) according to claim 1 for determining the level and density of the liquid in the tank, wherein:
the upper portion (30) is generally cylindrical the density sensing float (22) includes a magnet (24a) and the base portion (26) has a bore slidably receiving the transducer;
the liquid level sensing float (23) is slidably disposed in the cavity (30a) and has a bore slidably receiving the transducer and the level sensing float includes a magnet (24b); and
said circuitry is coupled to the transducer for determining the position of the magnets relative to the transducer.

## Patentansprüche

1. Vorrichtung (20) zum Platzieren in einen Behälter von Flüssigkeit zum Bestimmen des Niveaus und der Dichte der Flüssigkeit im Behälter, wobei die Vorrichtung Folgendes umfasst:
einen Flüssigkeitsdichte abfühlenden Schwimmer (22) mit einem unteren Basisabschnitt (26) und einem oberen Abschnitt (30), der einen Hohlraum (30a) definiert;
einen im Hohlraum angeordneten Flüssigkeitsniveau abfühlenden Schwimmer (23);
Schaltungen zum Bestimmen der Höhe des Dichte abfühlenden Schwimmers und des Niveau abfühlenden Schwimmers;
**dadurch gekennzeichnet, dass** sich der obere Abschnitt (30) im Wesentlichen kontinuierlich um einen Umfang des Basisabschnitts erstreckt.

2. Vorrichtung (20) nach Anspruch 1, wobei der Dichte abfühlende Schwimmer (22) und der Niveau abfühlende Schwimmer (23) jeweils einen Magneten (24a bzw. 24b) umfassen und die Schaltungen einen magnetorestriktiven Wandler (21) umfassen.

3. Vorrichtung (20) nach Anspruch 2, wobei der Dichte abfühlende Schwimmer (22) und der Niveau abfühlende Schwimmer (23) jeweils eine Öffnung umfassen, um den magnetorestriktiven Wandler (21) gleitend aufzunehmen.

4. Vorrichtung (20) nach Anspruch 1, wobei der Dichte abfühlende Schwimmer (22) dazu dimensioniert ist, durch eine 100 mm (vier Zoll) große Öffnung in den Tank zu passen.

5. Vorrichtung (20) nach Anspruch 1, wobei der obere Abschnitt (30) im Wesentlichen zylindrisch ist.

6. Vorrichtung (20) nach Anspruch 1 zum Platzieren in einen unterirdischen Flüssigkeits-Vorratsbehälter zum Bestimmen des Niveaus und der Dichte von Flüssigkeit im Behälter, wobei:
die Vorrichtung einen magnetorestriktiven Wandler (21) zur allgemein vertikalen Anordnung im Behälter umfasst;
der obere Abschnitt (30) allgemein zylindrisch ist, der Dichte abfühlende Schwimmer (22) einen Magneten (24a) umfasst und der Basisabschnitt (26) eine Bohrung hat, um den Wandler gleitend aufzunehmen;
der Flüssigkeitsniveau abfühlende Schwimmer (23) gleitend im Hohlraum (30a) angeordnet ist und eine Bohrung zum gleitenden Aufnehmen des Wandlers hat und der Niveau abfühlende Schwimmer einen Magneten (24b) umfasst; und
die genannten Schaltungen an den Wandler gekoppelt sind, um die Lage des Magneten relativ zum Wandler zu bestimmen.

7. System zum Messen der Höhe und Dichte einer Flüssigkeit, das Folgendes umfasst:
einen unterirdischen Vorratsbehälter, der die Flüssigkeit enthält und eine nominell 100 mm (vier Zoll) große Öffnung hat;
einen magnetorestriktiven Wandler (21), der allgemein vertikal im Behälter angeordnet ist, und
eine Vorrichtung (20) nach Anspruch 1 zum Bestimmen des Niveaus und der Dichte der Flüssigkeit im Behälter, wobei:
der obere Abschnitt (30) allgemein zylindrisch ist, der Dichte abfühlende Schwimmer (22) einen Magneten (24a) umfasst und der Basisabschnitt (26) eine den Wandler gleitend aufnehmende Bohrung hat;
der Flüssigkeitsniveau abfühlende Schwimmer (23) gleitend im Hohlraum (30a) angeordnet ist und eine den Wandler gleitend aufnehmende Bohrung hat und der Niveau abfühlende Schwimmer einen Magneten (24b) umfasst; und
die genannten Schaltungen an den Wandler gekoppelt sind, um die Lage des Magneten relativ zum Wandler zu bestimmen.

## Revendications

1. Dispositif (20) destiné à être placé dans un réservoir de liquide pour déterminer le niveau et la densité du liquide dans le réservoir, le dispositif comportant :
un flotteur (22) de détection de la densité du liquide possédant une portion de base inférieure (26) et une portion (30) supérieure définissant une cavité (30a) ;
un flotteur (23) de détection du niveau de liquide disposé dans la cavité ;
des circuits pour déterminer la hauteur du flotteur de détection de la densité et d'un flotteur de détection du niveau ;
**caractérisé en ce que** la portion (30) supérieure s'étend sensiblement de manière continue autour du pourtour de la base.

2. Dispositif (20) selon la revendication 1, dans lequel le flotteur (22) de détection de la densité et le flotteur (23) de détection du niveau comprennent chacun un aimant (24a ou 24b) et les circuits comprennent un transducteur (21) magnétostrictif.

3. Dispositif (20) selon la revendication 2, dans lequel le flotteur (22) de détection de la densité et le flotteur (23) de détection du niveau comprennent chacun une ouverture pour recevoir de manière coulissante le transducteur (21) magnétostrictif.

4. Dispositif (20) selon la revendication 1, dans lequel le flotteur (22) de détection de la densité est dimensionné pour loger dans une ouverture de 100 mm (quatre pouces) dans le réservoir.

5. Dispositif (20) selon la revendication 1, dans lequel la portion (30) supérieure est sensiblement cylindrique.

6. Dispositif (20) selon la revendication 1 destiné à être placé dans un réservoir de stockage de liquide souterrain pour déterminer le niveau et la densité de liquide dans le réservoir, dans lequel :
le dispositif comporte un transducteur (21) magnétostrictif devant être disposé en général verticalement dans le réservoir ;
la portion (30) supérieure est en général cylindrique, le flotteur (22) de détection de la densité comprend un aimant (24a) et la portion (26) de base présente un alésage pour recevoir de manière coulissante le transducteur ;
le flotteur (23) de détection du niveau de liquide est disposé de manière coulissante dans la cavité (30a) et présente un alésage pour recevoir de manière coulissante le transducteur et le flotteur de détection du niveau comprend un aimant (24b) ; et
lesdits circuits sont couplés au transducteur pour déterminer la position des aimants par rapport au transducteur.

7. Système de mesure de la hauteur et de la densité d'un liquide comportant :
un réservoir de stockage souterrain contenant le liquide et muni d'une ouverture de 100 mm (quatre pouces) ;
un transducteur (21) magnétostrictif disposé en général verticalement dans le réservoir ; et
un dispositif (20) selon la revendication 1 pour déterminer le niveau et la densité du liquide dans le réservoir, dans lequel :
la portion (30) supérieure est en général cylindrique, le flotteur (22) de détection de la densité comprend un aimant (24a) et la portion (26) de base présente un alésage recevant de manière coulissante le transducteur ;
le flotteur (23) de détection du niveau du liquide est disposé de manière coulissante dans la cavité (30a) et présente un alésage recevant de manière coulissante le transducteur et le flotteur de détection du niveau comprend un aimant (24b) ; et
lesdits circuits sont couplés au transducteur pour déterminer la position des aimants par rapport au transducteur.
